# DEMANDE DE BREVET EUROPEEN

(11) **EP 0 884 217 A1**
(43) Date de publication de la demande: **16.12.1998**
(21) Numéro de dépôt: 98401297.1
(22) Date de dépôt: 29.05.1998
(51) Int. Cl.: B60Q 3/04, H05B 33/08

(54) **Dispositif d'éclairage et tableau de bord comportant un tel dispositif.**

(30) Priorité: 12.06.1997 FR 9707282
(71) Demandeur: VIBRACHOC, Société Anonyme dite:, F-91028 Evry Cédex (FR)
(72) Inventeur: Bardy, Bernard, 94440 Villecresnes (FR)
(74) Mandataire: Hurwic, Aleksander

(57) **Abrégé**

La présente invention se rapporte principalement à un dispositif d'éclairage, notamment pour tableaux de bord de véhicules, par exemple d'aéronefs et à un tableau de bord comportant un tel dispositif.

Le dispositif d'éclairage selon la présente invention comporte des sources de lumière à semi-conducteur (1), une alimentation électrique munie d'un élément non linéaire (15,17) compensant la tension de seuil des sources de lumière à semi-conducteur.

La présente invention s'applique principalement à l'industrie aéronautique.

## Description

La présente invention se rapporte principalement à un dispositif d'éclairage, notamment pour tableaux de bord de véhicules, par exemple d'aéronefs et à un tableau de bord comportant un tel dispositif.

Un pilote d'avion doit simultanément regarder l'environnement de l'avion et notamment les obstacles potentiels à travers le pare-brise et les instruments du tableau de bord. Ces instruments sont éclairés par des lampes à incandescence. Pour limiter la fatigue visuelle du pilote, il est connu d'équiper les tableaux de bord d'avions d'un potentiomètre de réglage de la luminosité des lampes d'éclairage du tableau de bord et, notamment des panneaux de visualisation pour l'adapter à la luminosité externe. Le pilote augmente la luminosité de l'éclairage du tableau de bord lorsque la luminosité externe augmente pour la diminuer lorsque la luminosité externe diminue.

La mise en oeuvre de lampe à incandescence présente de nombreux inconvénients : consommation électrique importante ; durée de vie limitée et faible résistance aux chocs ainsi qu'aux vibrations.

Les sources lumineuses à semi-conducteur, comme par exemple les diodes électroluminescentes (LED en terminologie anglo-saxonne) ne présentent pas ces inconvénients, mais la variation de l'éclairement qu'elles procurent en fonction de la tension appliquée diffère de la variation de l'éclairage procuré par les lampes à incandescence auxquelles les pilotes sont habitués.

C'est par conséquent un but de la présente invention d'offrir un dispositif d'éclairage où au moins une partie des lampes à incandescence d'éclairage du tableau de bord a été remplacée par des sources de lumière à semi-conducteur.

C'est également un but de la présente invention d'offrir un tel dispositif comportant un moyen de commande de la luminosité et dont les lois de variation de l'éclairement correspondent sensiblement à celles des lampes à incandescence. Cette correspondance est physiologiquement particulièrement importante pour des faibles niveaux d'éclairement.

Ces buts sont atteints par un dispositif d'éclairage selon la présente invention comportant des sources de lumière à semi-conducteur, une alimentation électrique munie d'un élément non linéaire compensant la tension de seuil des sources de lumière à semi-conducteur.

Avantageusement, les sources de lumière à semi-conducteur comportent des diodes électroluminescentes et le ou les élément(s) non linéaire comportent des diodes Schottky.

L'invention a principalement pour objet un dispositif d'éclairage pour tableau de bord comportant une alimentation électrique alternative délivrant un courant sinusoïdal ou sensiblement sinusoïdal, des sources lumineuse, un variateur de puissance lumineuse caractérisé en ce que les sources lumineuses sont des sources lumineuses à semi-conducteur présentant un seuil de conduction et en ce qu'il comporte un composant non linéaire de compensation du seuil de conduction de source lumineuse à semi-conducteur de manière à ce que la loi de variation de l'illumination en fonction de la tension d'alimentation du dispositif d'éclairage corresponde à la loi de variation d'illumination en fonction de la tension d'alimentation de lampe à incandescence.

L'invention a également pour objet un dispositif d'éclairage caractérisé en ce que les sources lumineuses à semi-conducteur sont des diodes électroluminescentes.

L'invention a aussi pour objet un dispositif d'éclairage caractérisé en ce que les diodes électroluminescentes sont des diodes électroluminescentes de couleur jaune ambre.

L'invention a également pour objet un dispositif d'éclairage caractérisé en ce que le composant non linéaire de compensation du seuil des sources lumineuses à semi-conducteur comporte au moins une diode Schottky.

L'invention a aussi pour objet un dispositif caractérisé en ce qu'il comporte une pluralité de composant non linéaire de compensation du seuil de conduction de source de lumière à semi-conducteur formant un pont redresseur.

L'invention a également pour objet un dispositif caractérisé en ce qu'il comporte une résistance de limitation du courant circulant dans les sources de lumière à semi-conducteur.

L'invention a aussi pour objet un dispositif d'éclairage caractérisé en ce qu'il comporte une pluralité de diode électroluminescente connectées en parallèle à la sortie de la résistance de limitation de courant.

L'invention a également pour objet un dispositif d'éclairage caractérisé en ce qu'il comporte une pluralité de modules chaque module comportant une résistance de limitation de courant dont la sortie est connectée, en parallèle, à une pluralité de diode électroluminescente.

L'invention a aussi pour objet un dispositif d'éclairage caractérisé en ce qu'il comporte une alimentation à découpage délivrant un courant alternatif sinusoïdal ou sensiblement sinusoïdal basse tension.

L'invention a également pour objet un tableau de bord caractérisé en ce qu'il comporte un tel dispositif d'éclairage.

L'invention sera mieux comprise au moyen de la description ci-après et des figures annexées données comme des exemples non limitatifs et sur lesquels :
- la figure 1 est un schéma électrique d'un premier exemple de réalisation du dispositif selon la présente invention ;
- la figure 2 est un schéma électrique d'un deuxième exemple de réalisation d'un dispositif d'éclairage selon la présente invention ;
- la figure 3 est un schéma électrique de l'exemple préféré de réalisation d'un dispositif d'éclairage selon la présente invention ;
- la figure 4 est un schéma électrique d'une variante de réalisation du dispositif de la figure 3 comportant une pluralité de modules d'éclairage ;
- la figure 5 comporte deux courbes de la luminance en fonction de la tension ;
- la figure 6 comporte deux courbes analogues à celles de la figure 5 tracées sur une échelle logarithmique.

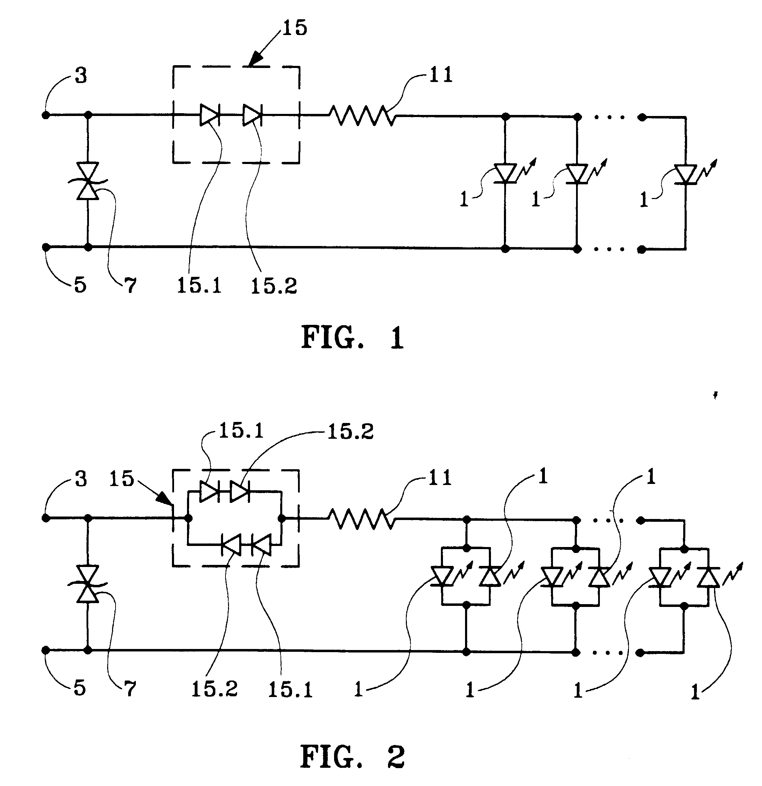

Sur les figures 1 à 6, on a utilisé les mêmes références pour désigner les mêmes éléments.

Sur les figures 1 à 4, on peut voir quatre variantes de réalisation d'un dispositif d'éclairage mettant en oeuvre au moins une source 1 de lumière à semi-conducteur, par exemple, au moins une diode électroluminescente alimentée par le circuit selon la présente invention, à partir d'une source de courant alternatif sinusoïdal ou sensiblement sinusoïdal, par exemple sous une tension variable de 0 à 5 volts.

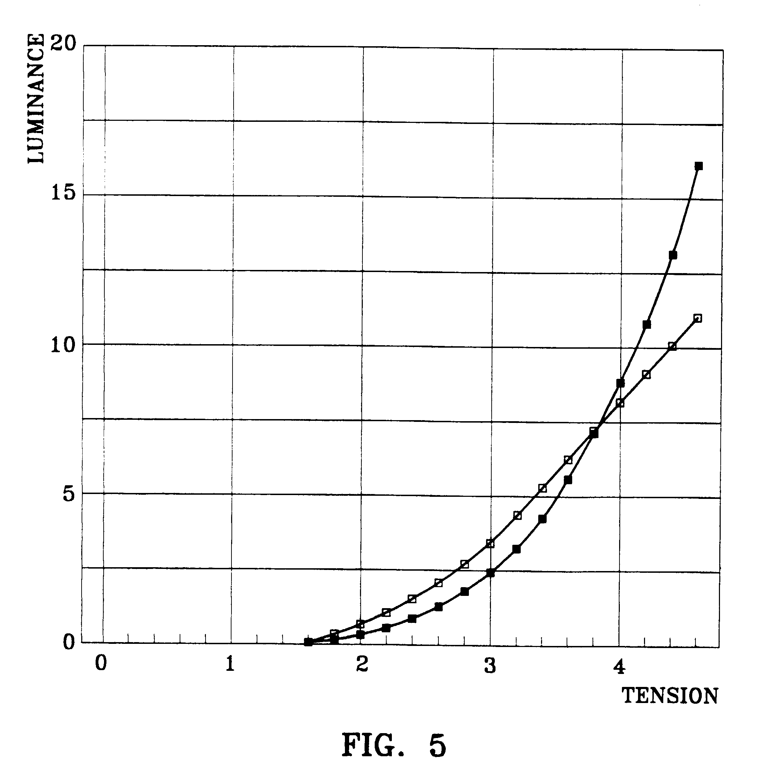

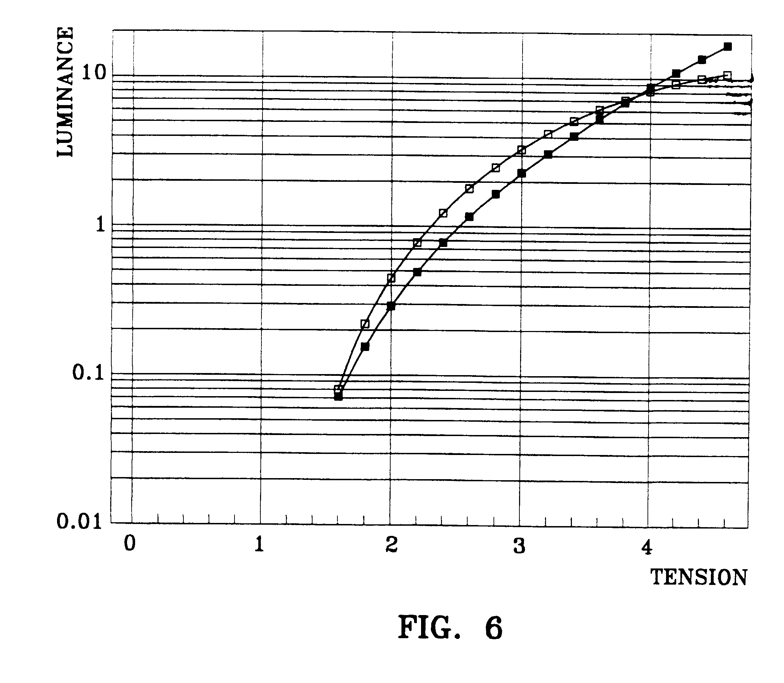

Le dispositif de la figure 1 comporte une première borne 3 et une seconde borne 5 reliées à une tension alternative sensiblement sinusoïdal fournie par exemple par une alimentation à découpage. Avantageusement, les bornes 3 et 5 sont reliées par un écrêteur de surtension bidirectionnel 7. La borne 3 est reliée à l'entrée d'un élément 15 non linéaire de compensation de seuil des diodes électroluminescentes 1. Par exemple, les diodes électroluminescentes 1 de couleur jaune ambre ont un seuil de conduction d'1,6 volts efficace, c'est-à-dire qu'elles n'émettent aucune lumière si elles sont soumises à une tension inférieure à 1,6 volts et que, comme il sera expliqué ci-après en référence aux figures 5 et 6, passé ce seuil, leur luminescence augmente de manière non linéaire avec la tension mais de manière sensiblement linéaire avec l'intensité du courant. L'élément non linéaire 15 comporte par exemple un transistor saturé dont le collecteur est connecté à la base, une diode à faible seuil ou, avantageusement, deux diodes Schottky 15.1 et 15.2 connectées en série. La sortie de l'élément non linéaire 15, notamment des diodes Schottky 15.1, 15.2 est reliée à l'entrée d'une résistance 11 de limitation de courant passant dans les diodes électroluminescentes 1. La sortie de la résistance 11 est reliée l'alimentation entre les bornes 3 et 5 permet de faire varier l'intensité lum en parallèle aux entrées de sources lumineuses à semi-conducteur 1, notamment aux diodes électroluminescentes. Les sorties des sources lumineuses à semi-conducteur 1 sont reliées à la seconde borne 5.

Le réglage de la tension alternative délivré par ineuse émise par les diodes électroluminescentes 1 d'une manière semblable à celle obtenue avec un potentiomètre monté en série avec des lampes à incandescence. Toutefois, le montage de la figure 1 n'est pas optimal en ce que les diodes électroluminescentes 1 ne conduisent que pendant une alternance sur deux du courant alternatif, en ce qu'elles conduisent un courant crête important et en ce que l'alimentation électrique est déséquilibrée.

Sur la figure 2, on peut voir une variante de réalisation du dispositif de la figure 1 comportant des diodes parallèles inversées. Ce dispositif comporte une première borne 3 et une seconde borne 5 reliées à une basse tension alternative sensiblement sinusoïdal fournie par exemple par une alimentation à découpage. Avantageusement, les bornes 3 et 5 sont reliées par un écrêteur de surtension bidirectionnel 7. La borne 3 est reliée à l'entrée d'un ensemble 15 d'éléments non linéaires de compensation du seuil de conduction des diodes électroluminescentes 1. L'ensemble 15 comporte, disposées en parallèle, deux branches comportant des éléments non linéaires unidirectionnels disposés dans un premier sens dans la première branche, et dans un deuxième sens opposé audit premier sens dans la seconde branche. Chaque branche comporte, par exemple, deux diodes Schottky 15.1 et 15.2 montées en série. La sortie de l'ensemble 15 est reliée à l'entrée d'une résistance 11 de limitation de courant passant dans les diodes électroluminescentes 1. La sortie de la résistance 11 est reliée aux entrées d'une pluralité de modules, chacun constitués de deux diodes électroluminescentes 1 montées en parallèle tête bêche. Les sorties desdits modules sont reliées à la borne 5. Contrairement au dispositif de la figure 1, le dispositif de la figure 2 ne provoque pas de déséquilibre dans l'alimentation électrique, mais chaque diode électroluminescente 1 ne conduit que pendant une alternance sur deux.

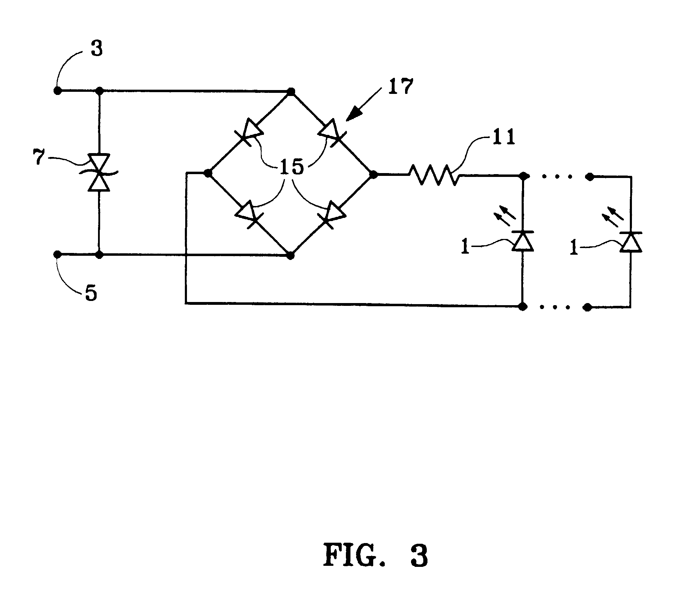

Sur la figure 3, on peut voir l'exemple préféré de réalisation du dispositif d'éclairage selon la présente invention. Le dispositif de la figure 3 comporte une première borne 3 et une seconde borne 5 reliées à une tension basse tension, variable sur commande, alternative (par exemple 400Hz) sensiblement sinusoïdal fournie par exemple par une alimentation à découpage. Avantageusement, les bornes 3 et 5 sont reliées par un écrêteur de surtension bidirectionnel 7. La borne 3 est reliée à une première entrée d'un pont 17 de redressement double alternance à diode Schottky 15. La seconde entrée du pont redresseur 17 est reliée à la borne 5. Une première sortie du pont de redressement 17 est reliée à l'entrée d'une résistance 11 de limitation de courant. La seconde sortie du pont de redressement 17 est reliée, en parallèle aux entrées des sources de lumière à semi-conducteur 1, notamment des diodes électroluminescentes. Les sorties de source lumineuse à semi-conducteur sont reliées à la sortie de la résistance 11.

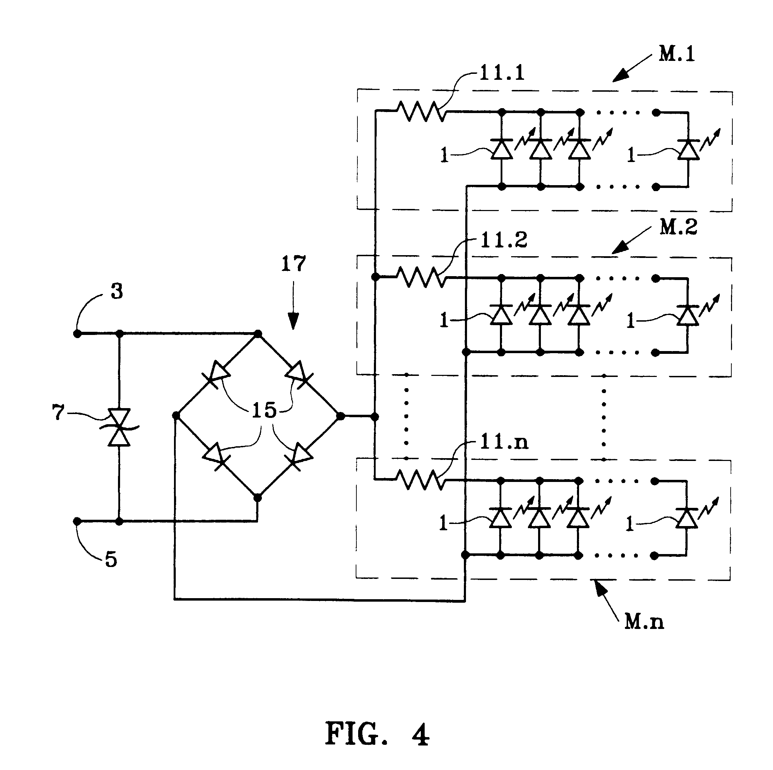

Sur la figure 4, on peut voir une variante de réalisation du dispositif de la figure 3 qui comporte n modules M d'éclairage, référencés M.1 à M.n, chaque module comportant une résistance 11.1 à 11.n de limitation de courant montée en série avec une pluralité de diodes électroluminescentes 1 montées en parallèle. Chaque module est connecté aux sorties du pont de redressement double alternance à diode Schottky 17. Pour les dispositifs des figures 3 et 4, la valeur et la puissance des résistances 11, 11.1, 11.2 à 11.n et le nombre de diodes électroluminescentes 1 sont choisies en fonction de l'illumination maximale désirée pour les divers parties d'un tableau de bord, notamment d'un aéronef.

Sur la figure 5 et 6, on a représenté la luminance exprimé cd/m² en fonction de la tension exprimée en volts d'une lampe à incandescence type T1 5 V 115 mA vendues par la Société OSHINO LAMPS (carrés noirs) ainsi que celle d'une diode électroluminescente (carrés blancs). Pour une tension inférieure à 1,6 volts la luminance de la lampe est négligeable, la conduction et par suite la luminance de la diode électroluminescente étant nulle. La région physiologiquement la plus importante se situe aux faibles luminances comprises principalement entre 1,6 volts et 2,8 volts. Pour ces valeurs, la luminance procurée par les diodes électroluminescentes est très légèrement supérieure à celle procurée par les lampes à incandescence. La valeur de luminance des diodes et des lampes est sensiblement égale pour une tension alternative de 3,8 volts. Entre 3,8 volts et 5 volts (tension de l'alimentation), la luminance des lampes à incandescence est supérieure à celle des diodes électroluminescentes. En effet, la loi d'illumination est sensiblement exponentielle, les lampes à incandescence obéissant à la loi de Stephen.

Pour construire un dispositif d'éclairage selon la présente invention adapté à un tableau de bord, on suit avantageusement les étapes suivantes :

Tout d'abord on détermine la couleur de l'éclairage désiré, puis on choisit une source de lumière à semi-conducteur correspondante, ce qui détermine le seuil de conduction du composant. Par exemple, pour des diodes électroluminescentes jaune ambre, ce seuil est égal à 1,6 volt.

On choisit ensuite le nombre de sources de lumières nécessaires pour assurer l'illumination désirée.

On choisit le composant non linéaire de compensation, notamment la ou les diodes Schottky adaptées à l'ensemble des diodes électroluminescentes à mettre en oeuvre. Les diodes Schottky devront supporter la tension directe, et la tension inverse continue ou accidentelle. La puissance de résistance 11 est déterminée par la formule P = R I², P étant la puissance, R étant sa résistance et I étant le courant maximal admissible.

La valeur de la résistance 11 peut être déterminée expérimentalement en plaçant dans le circuit un potentiomètre et en assurance des mesures photométriques de la lumière émise par les diodes électroluminescentes jusqu'à l'obtention de la valeur désirée.

Dans un exemple illustré sur la figure 3 pour panneau de cockpit d'avion ayant une surface de 2,5 dm² et pour une luminance moyenne de 10 cd/m², on a utilisé les composants suivants :
- écrêteur de surtension bidirectionnelle 7 de type TRANSIL commercialisé par la Société GENERAL INSTRUMENT sous la référence TGL 41-15.
- résistance 11 : un ensemble de résistances montées en parallèle ayant une résistance de 3,4 Ω ;
- pont de 4 diodes Schottky 15 : vendues par la Société THOMSON SGS sous la référence TM BYV 10-40 ;
- diode électroluminescente : nombre 170, émettant une lumière ayant une longueur d'ondes de 590 nm

La présente invention permet de conférer à des sources de lumière à semi-conducteur les lois d'illumination désirées par exemple, mais de manière non limitative, les lois d'illumination de lampes à incandescences.

La présente invention s'applique notamment à l'illumination de tableaux de bord, de panneaux de visualisation, de cadrans d'appareils de mesure, d'indicateurs lumineux ou analogues.

Des tels tableaux de bord comportant par exemple une plaque en matière plastique translucide recouverte de peinture blanche et d'un masque en peinture opaque dont les motifs laissent apparaître les marquages désirés. De tels panneaux utilisent par exemple des plaques analogues aux plaques des équipements correspondant à la norme Mil P 77 88.

L'électronique en panneaux est avantageusement réalisé avec des composants à montage en surface.

La présente invention s'applique principalement à l'industrie aéronautique.

## Revendications

1. Dispositif d'éclairage pour tableau de bord comportant une alimentation électrique alternative (3,5) délivrant un courant sinusoïdal ou sensiblement sinusoïdal, des sources lumineuses (1), un variateur de puissance lumineuse (9) caractérisé en ce que les sources lumineuse (1) sont des sources lumineuses à semi-conducteur présentant un seuil de conduction et en ce qu'il comporte un composant non linéaire (15) de compensation du seuil de conduction de source lumineuse à semi-conducteur de manière à ce que la loi de variation de l'illumination en fonction de la tension d'alimentation du dispositif d'éclairage corresponde à la loi de variation d'illumination en fonction de la tension d'alimentation de lampe à incandescence.

2. Dispositif d'éclairage selon la revendication 1 caractérisé en ce que les sources lumineuses à semi-conducteur (1) sont des diodes électroluminescentes.

3. Dispositif d'éclairage selon la revendication 2 caractérisé en ce que les diodes électroluminescentes (1) sont des diodes électroluminescentes de couleur jaune ambre.

4. Dispositif d'éclairage selon l'une quelconque des revendications précédentes caractérisé en ce que le composant (15) non linéaire de compensation du seuil des sources lumineuses à semi-conducteur comporte au moins une diode Schottky.

5. Dispositif selon l'une quelconque des revendications caractérisé en ce qu'il comporte une pluralité (17) de composant (15) non linéaire de compensation du seuil de conduction de source de lumière à semi-conducteur (1) formant un pont redresseur.

6. Dispositif selon l'une quelconque des revendications précédentes caractérisé en ce qu'il comporte une résistance (11) de limitation du courant circulant dans les sources de lumière à semi-conducteur (1).

7. Dispositif d'éclairage selon la revendication 6 caractérisé en ce qu'il comporte une pluralité de diode électroluminescente connectées en parallèle à la sortie de la résistance (11) de limitation de courant.

8. Dispositif d'éclairage selon la revendication 7 caractérisé en ce qu'il comporte une pluralité de modules (M.1 à M.n) chaque module comportant une résistance (11.1 à 11.n) de limitation de courant dont la sortie est connectée, en parallèle, à une pluralité de diode électroluminescente (1).

9. Dispositif d'éclairage selon l'une quelconque des revendication précédentes caractérisé en ce qu'il comporte une alimentation à découpage délivrant un courant alternatif sinusoïdal ou sensiblement sinusoïdal basse tension.

10. Tableau de bord caractérisé en ce qu'il comporte un dispositif d'éclairage selon l'une quelconque des revendications précédentes.
